# EUROPÄISCHE PATENTSCHRIFT

(11) **EP 2 507 535 B1**
(45) Veröffentlichungstag und Bekanntmachung des Hinweises auf die Patenterteilung: **27.01.2016**
(21) Anmeldenummer: 10788240.9
(22) Anmeldetag: 24.11.2010
(51) Int. Cl.: F16H 57/02, F16H 57/04

(54) **GEHÄUSE FÜR EIN GETRIEBE UND GETRIEBE**
TRANSMISSION HOUSING AND TRANSMISSION
CARTER D'ENGRENAGE ET ENGRENAGE

(30) Priorität: 01.12.2009 DE 102009056322
(43) Veröffentlichungstag der Anmeldung: 10.10.2012
(73) Patentinhaber: SEW-EURODRIVE GmbH & Co. KG, 76646 Bruchsal (DE)
(72) Erfinder: TEGELTIJA, Miki, 76689 Karlsdorf-Neuthardt (DE); BENDER, Josef, 76684 Östringen (DE)
(86) Internationale Anmeldenummer: PCT/EP2010/007105
(87) Internationale Veröffentlichungsnummer: WO 2011/066915

(56) Entgegenhaltungen:
- EP-A1- 0 617 214
- WO-A1-99/06743
- DE-A1- 1 932 624
- DE-A1- 10 333 747
- US-A1- 2007 022 836

## Beschreibung

Die Erfindung betrifft ein Getriebe mit einem Gehäuse.

Aus der EP 1 733 153 ist ein Gehäuse für ein Getriebe bekannt, welches eine antriebsseitige Kammer und eine abtriebsseitige Kammer bildet.

Aus der DE 12 84 804 A ist ein zweiteiliges Gehäuse für ein Getriebe bekannt.

Aus der US 2005/0160712 A1 ist ein Kegelradgetriebe mit Gehäuse bekannt.

Aus der US 2002/0139222 A1 ist ein Gehäuse für einen Übertragungsmechanismus bekannt.

Aus der EP 1 733 153 B1ist ein Stirnradgetriebe bekannt.

Aus der DE 19 32 624 A1 ist ein Getriebe entsprechend dem Oberbegriff von Anspruch 1, insbesondere ein Winkelgetriebe, bekannt, dessen Gehäuse einen Abtriebsabschnitt und einen Eintriebsabschnitt aufweist mit einer Auflagefläche für Lagereinsatz und Lagerdeckel. Die Mittenebene des Gehäuses steht senkrecht zu einer Stirnfläche des Eintriebsflansches. Die Eintriebswellenachse ist parallel zur Mittenebene und geht durch einen Mittelpunkt einer vom Eintriebsflansch umschlossenen Öffnung des Gehäuses, parallel versetzt zur Mittenebene.

Der Erfindung liegt daher die Aufgabe zugrunde, ein Gehäuse für ein Getriebe weiterzubilden, wobei das Gehäuse universell einsetzbar ist.

Erfindungsgemäß wird die Aufgabe bei dem Gehäuse nach den in Anspruch 1 angegebenen Merkmalen gelöst.

Merkmale der Erfindung bei dem Gehäuse sind, dass das Gehäuse für ein Getriebe, insbesondere Winkelgetriebe, einen Abtriebsabschnitt und einen Eintriebsabschnitt mit einem Eintriebsflansch umfasst und eine Mittenebene des Gehäuses senkrecht zu einer Stirnfläche des Eintriebsflansches steht, wobei eine Gerade, welche parallel zur Mittenebene und durch einen Mittelpunkt einer vom Eintriebsflansch umschlossenen Öffnung des Gehäuses verläuft, parallel versetzt zur Mittenebene verläuft.

Von Vorteil dabei ist, dass trotz der erhöhten Plantschverluste wegen der Ölbefüllung bis zur Zwischenwelle und/oder deren Lagerung das Gehäuse besonders kompakt ist und auch bei engen Platzverhältnissen ein Antrieb mit einem Getriebe mit dem Gehäuse einbaubar ist. Insbesondere ist das Gehäuse für ein Getriebe für eine Hängebahn einsetzbar.

Bevorzugt verläuft bei einem Winkelgetriebe die Mittenebene parallel zu einer weiteren Stirnfläche eines Abtriebsflansches. Von Vorteil dabei ist, dass der Abtriebsflansch auf zwei sich gegenüberliegenden Außenflächen des Gehäuses liegen kann und das Gehäuse besonders kompakt ist.

Erfindungsgemäß ragt der Eintriebsflansch über eine Gehäuseseite des Gehäuses hinaus, wobei der Eintriebsflansch mit dem Gehäuse über einen Kegelstumpfmantelabschnitt einstückig verbunden ist. Von Vorteil dabei ist, dass zum einen der Eintriebsflansch kompatibel zu einem Standardmotor ist, zum anderen das Gehäuse kompakt ist und wenig Raum ausfüllt.

Erfindungsgemäß ragt der Eintriebsflansch über eine Ecke des Gehäuses hinaus und ist mit dem Gehäuse über einen Kegelstumpfmantelabschnitt einstückig verbunden. Von Vorteil dabei ist, das eine quaderförmige einhüllende des Gehäuses möglichst klein ist und somit das Gehäuse kompakt ist.

Erfindungsgemäß ist das Gehäuse in einem Teilabschnitt, im Bereich einer in das Gehäuse einbaubaren Zwischenwelle, parallel zur Mittenebene verjüngt ausgeführt. Von Vorteil dabei ist, dass das Gehäuse wenig umbauten Raum einnimmt und flexibel auch bei beengten Platzverhältnissen einsetzbar ist.

Erfindungsgemäß verläuft eine Verbindungsgerade durch die Mittelpunkte der Lageraufnahmen senkrecht zur Mittenebene. Von Vorteil dabei ist, dass das Gehäuse stabil und kompakt ist.

Erfindungsgemäß stehen Abtriebslageraufnahmen für eine in das Gehäuse einbaubaren Abtriebswelle aus den zwei sich gegenüberliegenden Gehäuseseiten des Gehäuses hervor. Von Vorteil dabei ist, dass das Gehäuse wenig umbauten Raum verbraucht und flexibel einsetzbar ist.

Erfindungsgemäß weisen die in der Außenfläche des Gehäuses liegenden Stirnflächen der Abtriebslageraufnahmen ein Lochbild auf und sind somit als Abtriebsflansch ausgeführt. Von Vorteil dabei ist, dass sich eine anzutreibende Vorrichtung einfach und kompakt an dem Gehäuse befestigen lässt.

Erfindungsgemäß steht aus den Abtriebslageraufnahmen ein Zylindermantelabschnitt hervor, in welchen ein Wellendichtring zur Abdichtung einer durchgeführten Abtriebswelle oder ein Deckel zur Abdichtung des Gehäuses einbringbar ist. Von Vorteil dabei ist, dass das Gehäuse kompakt ist und wenig umbauten Raum beansprucht.

Erfindungsgemäß weist das Gehäuse eine Fußseite auf, welche bevorzugt eine Fußfläche aufweist, in welche ein Sackloch zur Montage eines Befestigungsmittels eingebracht ist. Von Vorteil dabei ist, das das Gehäuse einfach und kompakt einbaubar ist.

Erfindungsgemäß entspricht die Mittenebene im Bereich des Abtriebsabschnitts einer Symmetrieebene. Von Vorteil dabei ist, dass das Gehäuse vielseitig einsetzbar ist und kompakt baut.

Bei einer nicht breanspruchten Ausgestaltung ragt ein an einer dem Eintriebsflansch gegenüberliegenden Deckelseite ein Ausrückhebel durch einen Gehäusedeckel in das Gehäuse hinein und ist mit einem Kupplungsmechanismus verbunden, so dass eine Drehmomentübertragung zwischen einer in den Eintriebsflansch hineinragenden Eintriebswelle und der Abtriebswelle unterbrechbar und wiederherstellbar ist. Von Vorteil dabei ist, dass das Gehäuse als kompaktes Gehäuse für einen Hängebahnantrieb einsetzbar ist.

Bei einer weiteren nicht beanspruchten Ausgestaltung ist der Ausrückhebel mit einer Buchse auf der Abtriebswelle verbunden, so dass die Buchse durch bewegen des Ausrückhebels auf der Abtriebswelle verschiebbar ist, wobei die Buchse drehfest auf der Abtriebswelle axial beweglich angeordnet ist und durch axiales hin und her schieben mit Ausformungen in Aussparungen eines drehbar auf der Abtriebswelle angeordneten Zahnrads drehmomentübertragend in Eingriff bringbar ist, wobei das Abtriebszahnrad drehmomentübertragend mit der Eintriebswelle verbunden ist. Von Vorteil ist dabei, dass das Gehäuse kompakt baut, vielseitig einsetzbar ist und einen kompakte Kupplung aufweist.

Weitere Vorteile ergeben sich aus den Unteransprüchen. Die Erfindung ist nicht auf die Merkmalskombination der Ansprüche beschränkt. Für den Fachmann ergeben sich weitere sinnvolle Kombinationsmöglichkeiten von Ansprüchen und/oder einzelnen Anspruchsmerkmalen und/oder Merkmalen der Beschreibung und/oder der Figuren, insbesondere aus der Aufgabenstellung und/oder der sich durch Vergleich mit dem Stand der Technik stellenden Aufgabe.

Die Erfindung wird nun anhand von Ausführungsbeispielen mit Bezugnahme auf die Zeichnung näher erläutert. Es zeigen rein schematisch:
- Fig. 1:: eine dreidimensionale Ansicht eines erfindungsgemäßen Gehäuses für ein Getriebe;
- Fig. 2:: eine Unteransicht des in Figur 1 gezeigten Gehäuses;
- Fig. 3:: eine dreidimensionale Ansicht eines Getriebes mit einem erfindungsgemäßen Gehäuse; und

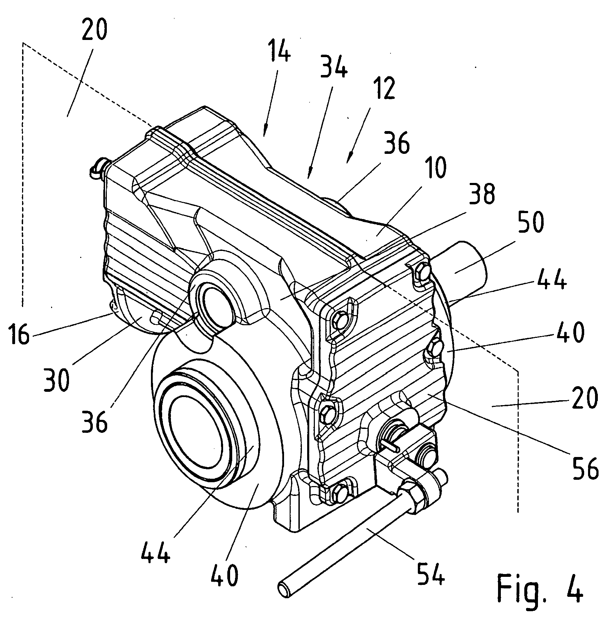

- Fig. 4:: eine dreidimensionale Rückansicht des in Figur 3 gezeigten Getriebes.

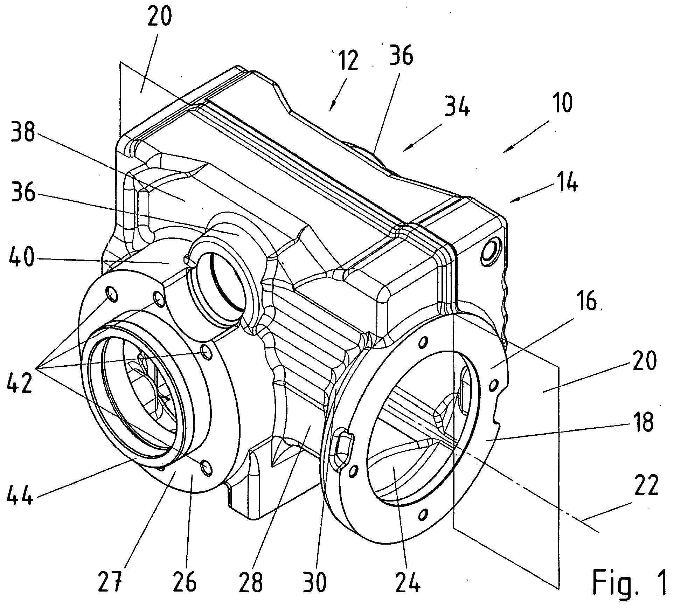

Figur 1 zeigt ein erfindungsgemäßes Gehäuse 10 für ein Getriebe. Das Gehäuse 10 ist insbesondere ein einstückiges Gussteil. Die grobe Grundform des Gehäuses 10 ist annähernd quaderförmig. Das Gehäuse 10 lässt sich In einen Abtriebsabschnitt 12 und einen Eintriebsabschnitt 14 unterteilen.

Der Eintriebsabschnitt 14 weist an einer Stirnseite des Gehäuses 10 einen Eiritriebsflansch 16 auf. Der Eintriebsflansch 16 weist eine vorzugsweise ringförmige Stirnfläche 18 auf, welche eine Öffnung 24 in der Eintriebsseite des Gehäuses 10 umschließt. Ein Mittelpunkt dieser Öffnung 24 liegt in der durch die Stirnfläche 18 aufgespannten Ebene und weist zu jedem Punkt auf einer Innenkante der Stirnfläche 18 je einen maximalen Abstand auf. Bei komplexeren Außenumrissen der Öffnung 24 lässt sich der Mittelpunkt als Punkt auf einem maximalen Abstand zwischen zwei beliebigen Punkten auf der Kante, welcher den Abstand in zwei gleich große Abschnitte teilt, bestimmen.

In der Eintriebsseite ist vorzugsweise ein Durchgangsloch eingebracht, in welches eine Entlüftung einschraubbar ist. Die Stirnfläche 18 weist eine Bohrbild auf, so dass an den Eintriebsfiansch 16 zum Beispiel ein Motorflansch anschraubbar ist.

Eine Mittenebene 20 teilt das Gehäuse 10 senkrecht zur Stirnfläche 18 in ungefähr zwei gleich große Hälften auf. Die Mittenebene 20 bildet vorzugsweise eine Symmetrieebene für den Abtriebsabschnitt 12. An der Oberfläche des Gehäuses 10 ist auf der Eintriebsseite und einer sich senkrecht daran anschließenden Deckelseite ein Wulst angeformt, dessen Scheitellinie in der Mitteneben 20 liegt.

Bei dem in der Zeichnung dargestellten Gehäuse 10 für ein Winkelgetriebe verläuft die Mittenebene 20 parallel zu einer weiteren Stirnfläche 27 eines Abtriebsflansches 26.

Eine Gerade 22, welche parallel zur Mittenebene 20 und durch den Mittelpunkt verläuft, ist parallel versetzt zur Mittenebene 20. Die Gerade 22 weist daher einen Abstand zur Mittenebene 20 auf. Dies Bedeutet, das der Eintriebsflansch 14 seitlich versetz an der Eintriebsseite angeordnet ist. Dadurch baut das Gehäuse 10 besonders kompakt. Diese Anordnung hat zur Folge, dass der Eintriebsflansch 16 zumindest über eine Gehäuseseite 38 des Gehäuses 10 hinausragt. Ein hinausragender Teil des Eintriebsflansches 16 ist mit dem Rest des Gehäuses 10 über einen Kegelstumpfmantelabschnitt 30 einstückig verbunden.

Vorzugsweise und wie in dem in den Figuren gezeigten Ausführungsbeispiel dargestellt, ragt der Eintriebsflansch 16 über eine Ecke 32 des Gehäuses 10 hinaus. Auch hierbei ist der hinausragenden Teil des Eintriebsflansch 16 mit dem Rest des Gehäuses 10 über einen Kegelstumpfmantelabschnitt 30 einstückig verbunden.

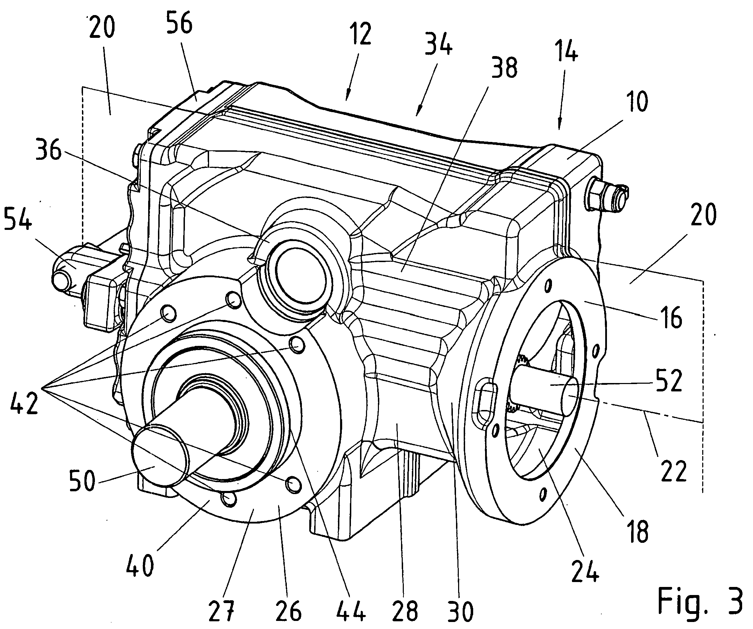

Wie in der Figur 3 im montierten Zustand des Getriebes gezeigt, ragt eine Eintriebswelle 52 durch den Eintriebsflansch 16 in das Gehäuse 10 hinein. Eine Achse der Eintriebswelle entspricht dabei der Geraden 22 durch den Mittelpunkt, d.h. die Gerade 22 steht senkrecht auf der durch die Stirnfläche 18 aufgespannten Ebene.

Das Gehäuse 10 ist in einem Teilabschnitt, insbesondere im Abtriebsabschnitt parallel zur Mittenebene 20 verjüngt ausgeführt. Der Teilabschnitt verjüngt sich einmal vom Eintriebsabschnitt 14 her und weitet sich dann zu einer der Eintriebsseite gegenüberliegenden Deckelseite des Gehäuses 10 wieder auf. Zum anderen verjüngt sich der Teilabschnitt vom Abtriebsflansch her bis zur Oberseite des Gehäuses 10. Dies erlaubt eine besonders kompakte Bauform des Gehäuses 10. Gleichzeitig ist die Oberfläche des Gehäuses 10 vergrößert und gewährleistet so eine bessere Entwärmung. Das Gehäuse 10 lässt sich auch bei engen Platzverhältnissen verwenden. Es nimmt nur wenig umbauten Raum ein.

Ist das Gehäuse 10 für ein Winkelgetriebe, insbesondere Kegelradgetriebe, ausgebildet, so liegt der Teilabschnitt im Bereich 34 einer in das Gehäuse 10 einbaubaren Zwischenwelle. Dadurch stehen Lageraufnahmen 36 für Lager für die Zwischenwelle aus der Gehäuseseite 38 und der der Gehäuseseite 38 gegenüberliegenden weiteren Gehäuseseite hervor. Eine Verbindungsgerade durch die Mittelpunkte der Lageraufnahmen 36 verläuft senkrecht zur Mittenebene.

Abtriebslageraufnahmen 40 für die Lager für eine in das Gehäuse 10 einbaubaren Abtriebswelle 50 stehen aus der Gehäuseseite 38 und der der Gehäuseseite gegenüberliegenden Gehäuseseite des Gehäuses 10 hervor. Die in der Außenfläche des Gehäuses 10 liegende weitere Stirnfläche 27 der Abtriebslageraufnahmen 40 weist ein Lochbild 42 auf. Die Sacklöcher des Lochbildes 42 weisen vorzugsweise Innengewinde auf. Somit ist eine anzutreibende Vorrichtung direkt an die Abtriebslageraufnahmen 40 anschraubbar beziehungsweise anflanschbar. Die weitere Stirnfläche 27 bildet mit dem Lochbild 42 einen Abtriebsflansch.

Bei den in den Figuren gezeigten Ausführungsbeispiel ist nur eine der Abtriebslageraufnahmen 40 beziehungsweise deren weitere Stirnfläche 27 als Abtriebsflansch mit Lochbild 42 ausgeführt. In einer alternativen Ausführungsform ist auch eine symmetrische Ausführung der Abtriebslageraufnahmen 40 möglich.

Die in den Figuren gezeigte Abtriebswelle 50 ist als Vollwelle ausgeführt und ragt nur auf der Gehäuseseite 38 aus dem Gehäuse 10 hinaus. Alternativ sind auch symmetrische Ausführungen oder auch Hohlwellen als Abtriebswelle 50 möglich.

Aus den Abtriebslageraufnahmen 40 steht ein Zylindermantelabschnitt 44 hervor. In den Zylindermantelabschnitt 44 ist ein Wellendichtring zur Abdichtung der durchgeführten Abtriebswelle oder ein Deckel zur Abdichtung des Gehäuses 10 im Zusammengebauten Zustand des Getriebes eingebaut.

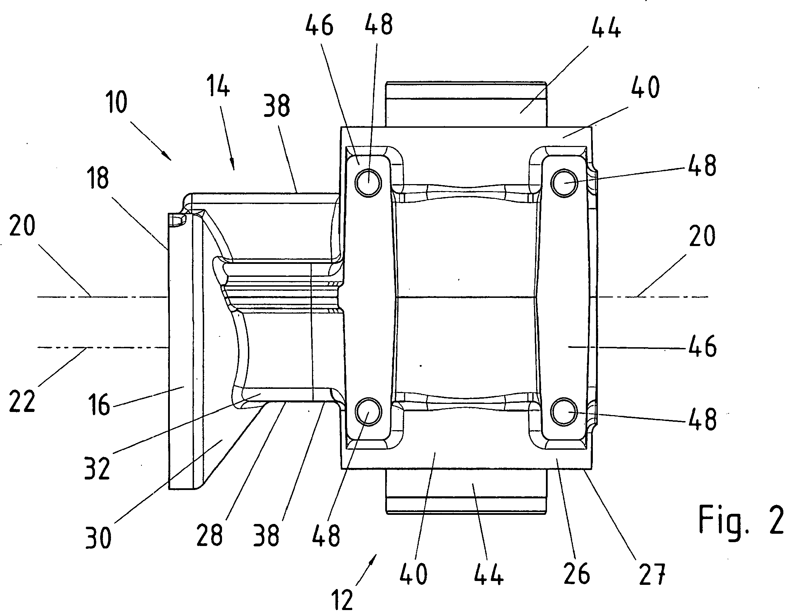

Das Gehäuse 10 weist eine in Figur 2 gezeigte Fußseite auf. Die Fußseite bildet eine Fußfläche 46, in welche ein Sackloch 48 zur Montage eines Befestigungsmittels eingebracht ist. Dafür weist das Sackloch 48 vorzugsweise ein Innengewinde auf.

Die Deckelseite weist eine Montageöffnung zur Montage der Getriebeelemente wie Wellen, Zahnräder und Lager auf. Die Montageöffnung ist durch einen Gehäusedeckel 56 verschließbar. Durch den Gehäusedeckel 56 ist ein Ausrückhebel 54 geführt, so dass ein Teilabschnitt des Ausrückhebels 54 in das Gehäuse 10 hineinragt. Der Ausrückhebel 54 ist mit einem Kupplungsmechanismus verbunden, so dass eine Drehmomentübertragung zwischen der Eintriebswelle 52 und der Abtriebswelle 50 unterbrechbar und wiederherstellbar ist. Vorteilhaft ist bei dieser Anordnung, dass die Kupplung und der Ausrückhebel einfach zu demontieren und somit einfach zu reparieren und zu warten ist.

Der Ausrückhebel 54 mit einer Buchse auf der Abtriebswelle 50 verbunden. Die Buchse ist drehfest und axial beweglich auf der Abtriebswelle 50 angeordnet. Eine Drehbewegung des Ausrückhebels 54 wird in eine axiale Bewegung der Buchse gewandelt. Die Buchse verschiebt sich axial auf der Abtriebswelle 50. Auf der Abtriebswelle 50 ist drehbar ein Zahnrad angeordnet. Das Zahnrad ist drehmomentübertragend mit der Eintriebswelle 52 verbunden ist. Durch das axiale hin und her Schieben der Buchse sind Ausformungen der Buchse in Aussparungen des Zahnrads drehmomentübertragend in Eingriff bringbar und wieder lösbar.

Durch das Anordnen der Zwischenwellenlagerung über der Eintriebswelle, deren Achse wiederum über der Abtriebswellenachse angeordnet ist, die der Fußseite am nächsten liegt, wird zwar die schnelldrehende Welle im Öl angeordnet und somit werden höhere Verluste akzeptiert, jedoch ist somit die Achshöhe, also der Abstand der Abtriebswellenachse zur Fußplatte gering haltbar.

Bei einer Ausführung als Kegelradgetriebe liegt eine Achse einer Kegelradwelle vorzugsweise in der Mittenebene 20.

### Bezugszeichenliste

- 10: Gehäuse
- 12: Abtriebsabschnitt
- 14: Eintriebsabschnitt
- 16: Eintriebsflansch
- 18: Stirnfläche
- 20: Mittenebene
- 22: Gerade
- 24: Öffnung
- 26: Abtriebsflansch
- 27: weitere Stirnfläche
- 28: Seitenfläche
- 30: Kegelstumpfmantelabschnitt
- 32: Ecke des Gehäuses
- 34: Bereich einer in das Gehäuse einbaubaren Zwischenwelle
- 36: Lageraufnahmen
- 38: Gehäuseseite
- 40: Abtriebslageraufnahmen
- 42: Lochbild
- 44: Zylindermantelabschnitt
- 46: Fußfläche
- 48: Sackloch
- 50: Abtriebswelle
- 52: Eintriebswelle
- 54: Ausrückhebel
- 56: Gehäusedeckel

## Patentansprüche

1. Getriebe, insbesondere Winkelgetriebe, mit einem Gehäuse (10), einer Eintriebswelle (52), einer Abtriebswelle (50) und einer in das Gehäuse (10) eingebauten Zwischenwelle,
wobei das Gehäuse (10) einen Abtriebsabschnitt (12) und einen Eintriebsabschnitt (14) mit einem Eintriebsflansch (16) umfasst und
eine Mittenebene (20) des Gehäuses senkrecht zu einer Stirnfläche (18) des Eintriebsflansches steht,
wobei eine Gerade (22), weiche parallel zur Mittenebene (20) und durch einen Mittelpunkt einer vom Eintriebsflansch (16) umschlossenen Öffnung (24) des Gehäuses verläuft, parallel versetzt zur Mittenebene (20) verläuft,
wobei die Gerade (22) die Eintriebswellenachse des Getriebes ist,
wobei das Gehäuse (10) in einem Teilabschnitt parallel zur Mittenebene (20) verjüngt ausgeführt ist,
wobei eine Verbindungsgerade durch die Mittelpunkte von Lageraufnahmen (36) der Zwischenwelle senkrecht zur Mittenebene (20) verläuft,
wobei die Mittenebene (20) im Bereich des Abtriebsabschnitts (12) einer Symmetrieebene entspricht,
wobei Abtriebslageraufnahmen (40) für eine in das Gehäuse (10) einbaubaren Abtriebswelle (50) aus den zwei sich gegenüberliegenden Gehäuseseiten des Gehäuses hervorstehen,
wobei die in der Außenfläche des Gehäuses liegenden Stirnflächen (18, 27) der Abtriebslageraufnahmen (40) ein Lochbild (42) aufweisen und somit als Abtriebsflansch (26) ausgeführt sind,
wobei aus den Abtriebslageraufnahmen (40) ein Zylindermantelabschnitt (44) hervorsteht, in welchen ein Wellendichtring zur Abdichtung einer durchgeführten Abtriebswelle (50) oder ein Deckel zur Abdichtung des Gehäuses einbringbar ist,
**dadurch gekennzeichnet, dass** die Eintriebswellenachse weiter entfernt von einer Fußseite des Gehäuses ist als die Abtriebswellenachse,
wobei die Zwischenwellenachse, also die Achse der Zwischenwelle, weiter entfernt ist von der Fußseite als die Eintriebswellenachse und die Abtriebswellenachse,
wobei das Gehäuse (10) in dem Teilabschnitt im Bereich der Zwischenwelle parallel zur Mittenebene (20) verjüngt ausgeführt ist,
wobei der Eintriebsflansch (16) über eine Gehäuseseite des Gehäuses oder über eine Ecke (32) des Gehäuses hinausragt,
wobei der Eintriebsflansch (16) mit dem Gehäuse (10) über einen Kegelstumpfmantelabschnitt (30) einstückig verbunden ist.

2. Getriebe nach Anspruch 1,
**dadurch gekennzeichnet, dass**
bei einem Winkelgetriebe die Mittenebene (20) parallel zu einer weiteren Stirnfläche (27) eines Abtriebsflansches (26) verläuft.

3. Getriebe nach einem der vorangegangenen Ansprüche,
**dadurch gekennzeichnet, dass**
die Fußseite eine Fußfläche (46) aufweist, in welche ein Sackloch (48) zur Montage eines Befestigungsmittels eingebracht ist.

4. Getriebe nach einem der vorangegangenen Ansprüche,
**dadurch gekennzeichnet, dass**
die Ölbefüllung des Getriebes im Ruhezustand des Getriebes die Lagerung der Zwischenwelle zumindest teilweise bedeckt und/oder ein auf der Zwischenwelle gelagertes Verzahnungsteil zumindest teilweise mit Öl bedeckt ist.

## Claims

1. Gearing, in particular angular gearing, having a housing (10), an input shaft (52), an output shaft (50) and an intermediate shaft installed in the housing (10),
wherein the housing (10) comprises an output section (12) and an input section (14) having an input flange (16) and
a centre plane (20) of the housing is perpendicular to an end face (18) of the input flange,
wherein a straight line (22), which runs parallel to the centre plane (20) and through a mid-point of an opening (24) of the housing surrounded by the input flange (16), runs offset parallel to the centre plane (20),
wherein the straight line (22) is the input shaft axis of the gearing,
wherein the housing (10) is of tapered design in a partial section parallel to the centre plane (20),
wherein a connecting straight line runs through the mid-points of bearing receptacles (36) of the intermediate shaft perpendicularly to the centre plane (20),
wherein the centre plane (20) corresponds in the region of the output section (12) to a plane of symmetry,
wherein output bearing receptacles (40) for an output shaft (50) installable in the housing (10) project from the two mutually opposite housing sides of the housing,
wherein the end faces (18, 27) of the output bearing receptacles (40) lying in the outer surface of the housing have a hole pattern (42) and are thus designed as an output flange (26),
wherein a cylinder lateral surface section (44) projects from the output bearing receptacles (40), into which section is introducible a shaft sealing ring for sealing a led-through output shaft (50) or a cover for sealing the housing,
**characterised in that** the input shaft axis is further away from a foot side of the housing than the output shaft axis,
wherein the intermediate shaft axis, that is to say the axis of the intermediate shaft, is further away from the foot side than the input shaft axis and the output shaft axis,
wherein the housing (10) is of tapered design in the partial section in the region of the intermediate shaft parallel to the centre plane (20),
wherein the input flange (16) protrudes beyond a housing side of the housing or beyond a corner (32) of the housing,
wherein the input flange (16) is integrally connected to the housing (10) via a truncated cone lateral surface section (30).

2. Gearing according to claim 1,
**characterised in that**
in an angular gearing the centre plane (20) runs parallel to a further end face (27) of an output flange (26).

3. Gearing according to one of the preceding claims,
**characterised in that**
the foot side has a foot surface (46) in which is formed a blind hole (48) for mounting a fastening means.

4. Gearing according to one of the preceding claims,
**characterised in that**
the oil filling of the gearing in the rest state of the gearing at least partially covers the bearing of the intermediate shaft and/or a toothing part mounted on the intermediate shaft is at least partially covered with oil.

## Revendications

1. Transmission, en particulier renvoi d'angle, avec un carter (10), un arbre d'entrée (52), un arbre de sortie (50) et un arbre intermédiaire monté dans le carter (10),
dans laquelle le carter (10) comprend une section de sortie (12) et une section d'entrée (14) avec une bride d'entrée (16) et
un plan médian (20) du carter est perpendiculaire à une face frontale (18) de la bride d'entrée,
dans laquelle une droite (22) qui s'étend parallèlement au plan médian (20) et passe par un centre d'une ouverture (24) du carter entourée par la bride d'entrée (16) est décalée parallèlement par rapport au plan médian (20),
dans laquelle la droite (22) est l'axe de l'arbre d'entrée de la transmission,
dans laquelle le carter (10) est réalisé rétréci parallèlement au plan médian (20) dans une section partielle,
dans laquelle une droite de liaison passant par les centres de logements de palier (36) de l'arbre intermédiaire s'étend perpendiculairement au plan médian (20),
dans laquelle le plan médian (20) correspond à un plan de symétrie dans la zone de la section de sortie (12),
dans laquelle des logements de palier de sortie (40) pour un arbre de sortie (50) pouvant être monté dans le carter (10) font saillie des deux côtés de carter opposés du carter,
dans laquelle les faces frontales (18, 27) des logements de palier de sortie (40) qui sont situées dans la surface extérieure du carter présentent une configuration de perçage (42) et sont donc réalisées sous la forme d'une bride de sortie (26),
dans laquelle une section d'enveloppe cylindrique (44) fait saillie des logements de palier de sortie (40), dans laquelle peut être monté un joint d'arbre radial assurant l'étanchéité d'un arbre de sortie (50) passant à travers lui ou un couvercle assurant l'étanchéité du carter,
**caractérisée en ce que**
l'axe de l'arbre d'entrée est plus éloigné d'un côté pied du carter que l'axe de l'arbre de sortie,
l'axe de l'arbre intermédiaire étant plus éloigné du côté pied que l'axe de l'arbre d'entrée et l'axe de l'arbre de sortie,
le carter (10) étant réalisé rétréci parallèlement au plan médian (20) dans la section partielle dans la zone de l'arbre intermédiaire,
la bride d'entrée (16) dépassant d'un côté de carter du carter ou d'un angle (32) du carter,
la bride d'entrée (16) étant reliée d'une seule pièce au carter (10) par une section d'enveloppe tronconique (30).

2. Transmission selon la revendication 1,
**caractérisée en ce que**
dans le cas d'un renvoi d'angle, le plan médian (20) s'étend parallèlement à une autre face frontale (27) d'une bride de sortie (26).

3. Transmission selon l'une des revendications précédentes,
**caractérisée en ce que**
le côté pied présente une surface de pied (46) dans laquelle est réalisé un trou borgne (48) pour le montage d'un moyen de fixation.

4. Transmission selon l'une des revendications précédentes,
**caractérisée en ce**
**qu'**à l'état de repos de la transmission, le remplissage d'huile de la transmission recouvre au moins partiellement les paliers de l'arbre intermédiaire et/ou qu'une pièce d'engrenage montée sur l'arbre intermédiaire est au moins partiellement recouverte d'huile.
